# FASCICULE DE BREVET EUROPEEN

(11) **EP 3 898 801 B1**
(45) Date de publication et mention de la délivrance du brevet: **26.02.2025**
(21) Numéro de dépôt: 19842791.6
(22) Date de dépôt: 09.12.2019
(51) Int. Cl.: C08J 11/24

(54) **PROCEDE DE RECYCLAGE DE DECHETS DE PLASTIQUES PET**
VERFAHREN ZUM RECYCLING VON PET-KUNSTSTOFFABFÄLLEN
METHOD FOR RECYCLING PET PLASTIC WASTE

(30) Priorité: 18.12.2018 FR 1873135
(43) Date de publication de la demande: 27.10.2021
(73) Titulaire: Recyc'Elit, 69200 Venissieux (FR)
(72) Inventeur: MEDIMAGH, Raouf, 69200 Vénissieux (FR); MDIMEGH, Karim, 69800 Saint Priest (FR)
(74) Mandataire: IP Trust
(86) Numéro de dépôt international: PCT/FR2019/052975
(87) Numéro de publication internationale: WO 2020/128218

(56) Documents cités:
- CN-A- 108 359 126
- US-B1- 9 550 713

## Description

La présente invention concerne le domaine du recyclage de déchets de plastiques PET.

Le polyéthylène téréphtalate (PET) est un polymère semi-cristallin connu pour son utilisation dans la fabrication de bouteilles de grande consommation. Son intérêt est qu'il présente de bonnes propriétés mécaniques et chimiques, ainsi qu'une bonne stabilité thermique, une excellente transparence associée à de bonnes propriétés barrières (perméabilité aux gaz, aux contaminants).

Le polyéthylène téréphtalate (PET) est un polyester linéaire dont l'unité de répétition est représentée ci-après

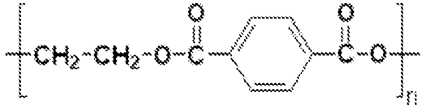

La présence d'un groupement rigide dans le squelette de la chaîne assure la cohésion du polymère. Sa structure chimique lui confère ainsi une grande rigidité.

Le PET peut être produit par différentes voies de synthèse :
- l'estérification de l'acide téréphtalique et de l'éthylène glycol ;
- la Trans estérification du diméthyle téréphtalate et de l'éthylène glycol plus couramment utilisée car la purification du polymère est plus facile.

Ces deux réactions se déroulent en deux étapes : la pré-polycondensation et la polycondensation.

Le recyclage des déchets de plastiques PET provenant aussi bien des chutes industrielles que de la post consommation constitue un enjeu écologique majeur.

Au jour d'aujourd'hui, les techniques de recyclage sont de quatre types : primaire, secondaire, tertiaire et quaternaire (incinération) que nous n'allons pas détailler ici. Les deux premiers ont trait à un recyclage mécanique, actuellement le plus répandu. Leurs inconvénients résident dans le fait de la limite d'opérabilité vu que le matériau recyclé perd de ses propriétés mécaniques au bout de quelques opérations de recyclage à cause de la dégradation thermique et mécanique.

D'une manière particulière les PET opaques, posent un sérieux problèmes pour les recycleurs puisqu'ils ne peuvent être assimilés dans la même chaine de recyclage des autres plastiques PE ou PP. D'une manière avantageuse, le recyclage tertiaire ou chimique, présente l'avantage de pouvoir récupérer par dépolymérisation, les monomères de départ vierges qui sont l'acide téréphtalique (PTA) et l'éthylène glycol (EG). Cette voie du recyclage par dépolymérisation partielle ou complète du PET en monomères ou oligomères permet le recyclage sous la forme de la production d'un nouveau PET avec un grand nombre de cycles.

Les agents de dépolymérisation connus dans l'art antérieur sont multiples : l'eau (hydrolyse), le méthanol (méthanolyse), l'éthylène glycol (glycolyse) et le butanediol (diolyse). Les procédés de dépolymérisation les plus communs aujourd'hui sont la glycolyse et la méthanolyse.

L'hydrolyse et la méthanolyse permettent de régénérer les monomères (acide téréphtalique, diméthyle téréphtalate et éthylène glycol) tandis que la glycolyse et autre solvolyse permettent simplement de produire des oligomères. Il est également possible de convertir chimiquement les déchets en modifiant leur structure pour des applications particulières, telle que la production de polyuréthanes (aminolyse) ou de polyesters insaturés. L'aminolyse consiste à dépolymériser le PET à l'état solide dans une solution aqueuse contenant des amines primaires, et permet la formation de diamides, d'acide téréphtalique et d'éthylène glycol. Les diamides formés sont ensuite utilisés comme monomères pour la production de poly(ester amides) ou polyuréthanes via des réactions avec des isocyanates. L'utilisation du PET comme source de monomères (par dépolymérisation et modification chimique) pour la production d'intermédiaires chimiques est limitée en volume. Toutefois, la commercialisation de ces intermédiaires semble connaître une augmentation relativement importante selon de récentes études économiques.

Après dépolymérisation, les monomères et/ou oligomères sont purifiés par distillation sous vide et repolymérisés avec de l'éthylène glycol pour donner du PET. Le polymère obtenu peut ensuite être utilisé pour la fabrication d'emballages alimentaires. L'avantage est qu'il n'est pas nécessaire de trier le PET avant transformation, et qu'il est possible d'utiliser différents grades de PET sans que cela n'ait d'influence sur les produits obtenus.

### État de la technique

On connaît dans l'état de la technique des solutions décrites dans le brevet américain US9550713 concernant la dépolymérisation de polymères et la récupération des substances de départ utilisées pour la production du polymère. Ce document de l'art antérieur concerne plus précisément la dépolymérisation de polytéréphtalate d'éthylène (PET) et la récupération d'acide téréphtalique et d'éthylène glycol. en faisant appel à un solvant apolaire et halogéné, préférentiellement le dichlorométhane.

L'inconvénient de cette solution connue est que le dichlorométhane étant un solvant classifié en catégorie 2 pour les effets cancérogènes et mutagènes et est soumis à restriction par la directive REACH, ce qui rend l'application industrielle très problématique. De plus, de point de vue opérabilité, les industriels ne privilégient pas l'utilisation des solvants chlorés dans leurs équipements de par leur caractère réactif et nocif pour l'environnement lors des rejets en cheminées. Enfin, cette application décrit principalement l'obtention de l'acide téréphtalique et non pas son ester.

On connaît aussi le brevet Chinois CN108359126 décrivant un autre procédé de recyclage de déchets de film protecteur en PET (polyéthylène glycol téréphtalate) comprenant les étapes suivantes:
- fragmentation des déchets de film,
- ajout des morceaux dans deux réactifs de dégommage préparés et dégommage progressif de trois types d'adhésifs,
- ajout et lavage des morceaux dégommés dans un réactif de lavage à haute température,
- et enfin soufflage pour le séchage, obtenant ainsi des morceaux de film propres.

Le procédé de recyclage décrit par ce document de l'art antérieur a pour d'éliminer et de séparer efficacement toutes sortes d'adhésifs dans les déchets de film protecteur en PET sans utilisation d'eau pour le lavage. Ce brevet ne décrit pas l'utilisation de ce prétraitement en vue de la dépolymérisation ultérieure de ces films par voie chimique.

### Solution apportée par l'invention

Afin de remédier à ces inconvénients, la présente invention concerne un procédé de recyclage de déchets de plastiques PET comportant une étape de broyage des déchets pour produire des fragments parcellaires et une étape de traitement de dépolymérisation desdits fragments parcellaires pour la récupération des monomères de départ vierges qui sont l'acide téréphtalique (PTA) ou son ester (DMT) et l'éthylène glycol (EG) caractérisé en ce qu'il comporte :
- une étape de prétraitement par trempage sans dissolution dans un récipient assurant une agitation continue, desdits fragments parcellaires dans une solution comprenant au moins un mélange de solvants comprenant au moins un réactif choisi parmi les composants comprenant le DMAc (diméthyl acétamide), le DMF (diméthyl formamide), le MEK (Methyl Ethyl Ketone), des esters phénoliques ou des biphényl éthers à une température inférieure à 50° et pendant une durée inférieure à 18 heures,
- suivie par une étape de décantation et essorage
- suivie par une étape de traitement des fragments de PET prétraités dans un récipient contenant un monoalcool ou un diol et une base à une température inférieure à 50°
- suivie par une opération de récupération du solide en suspension et de filtrage.

Selon une variante, ledit réactif de l'étape de prétraitement est constituée par le DMAc ou le DMF, l'étape de décantation étant suivie par une étape de lavage des fragments prétraités avec un alcool avant l'ajout de la base.

Selon une variante, ladite étape de décantation comporte un traitement de récupération des réactifs pour la réutilisation pour un prétraitement ultérieur de nouveaux déchets de plastique PET.

De préférence, les bases sont l'hydroxyde de potassium KOH ou l'hydroxyde de sodium NaOH.

Les bases sont introduites soit en pastilles soit en solution aqueuse.

Pour les alkoxydes, le méthoxyde de sodium ou de potassium, le milieu doit être anhydre. Dans ce cas il est possible d'obtenir avantageusement l'ester de l'acide téréphtalique correspondant (DMT).

Avantageusement, le dit solide récupéré est un monoester ou un diester méthylique de l'acide térephtalique.

Selon une variante, ledit solide récupéré est soumis à une filtration et une distillation pour récupérer le dit ester de téréphtalate diméthanolique (DMT).

Selon une autre variante, ledit solide récupéré est dissous dans une solution aqueuse pour donner lieu à la forme basique de l'acide téréphtalique soluble dans l'eau.

De préférence, la solution obtenue est soumise à l'ajout d'un acide minéral ou organique pour l'obtention de l'acide téréphtalique par précipitation.

### Description détaillée d'un exemple non limitatif de réalisation

La présente invention sera mieux comprise à la lecture de la description qui suit concernant un exemple non limitatif de réalisation de l'invention.

Le procédé de recyclage selon l'exemple de l'invention comporte une succession d'étapes présentée ci-après.

La première étape est une préparation mécanique des matériaux en PET à recycler par broyage, pour les réduire en fragments minces d'une taille de quelques centimètres carrées. Ces déchets fragmentés peuvent être approvisionnés directement puisqu'ils existent sur le marché ce qui facilite le procédé.

La deuxième étape consiste à prétraiter les fragments de PET sans procéder à une dissolution immédiate. Cette étape de prétraitement vise à favoriser l'étape ultérieure de dépolymérisation du polymère, sans solubilisation totale du polymère pour faciliter la pénétration ultérieure des molécules au sein de la matrice nonobstant le caractère hydrophobe de par la nature des monomères du PET. Il est à noter que sans cette étape de prétraitement la dépolymérisation dans les conditions douces citées ci-dessus est impossible pour des temps de contacts raisonnables.

Dans le cas des PET très minces tels que les barquettes, il est possible d'avoir la présence d'un autre polymère qui part en solution. Par contre, cette étape ne provoque pas la dissolution du PET mais seulement, optionnellement, celle du polymère formant le revêtement.

Cette étape de prétraitement est réalisée à la température ambiante, et de préférence inférieure à 50°C.

Cette étape de prétraitement est réalisée par trempage des morceaux broyés ou découpés du PET à recycler dans une cuve contenant un réactif ou un mélange de réactifs choisis parmi :
- les solvants tels que le le DMAc (diméthyl acétamide), DMF (diméthyl formamide), la Méthyl Ethyl Cétone ou (MEK)
- les compositions commerciales comprenant des esters phénoliques, des biphényl éthers mélangés avec des solvants.

Ce mélange de solvants modifie l'ordonnancement des chaines de polymères au sein du matériau et rend les fonctions esters plus accessibles afin de les rompre lors de l'étape ultérieure de dépolymérisation.

La durée de trempage dans ce mélange de réactif est comprise entre 1 minute à 18h, préférentiellement de 30 minutes (par exemple pour des barquettes) à 6h, plus précisément entre 30 minutes à 3h, à une température allant de 20 °C à 100°C, préférentiellement de 23 à 50°C, plus précisément à 25°C. Le mélange de morceaux dans le solvant est soumis à une agitation continue pour améliorer substantiellement l'efficacité de cette étape.

L'étape suivante consiste à décanter les morceaux ainsi prétraités. L'avantage de cette démarche consiste à s'affranchir de l'étape ultérieure de recyclage du solvant à haut point d'ébullition nécessitant des opérations de distillation.

Le solvant peut être réutilisé à plusieurs reprises dans des bacs, réacteurs ou tout autre dispositif séparément. Les morceaux de PET traités sont ensuite, égouttés, optionnellement séchés et transférés dans un réacteur en verre.

L'étape suivante consiste à traiter les fragments décantés dans un bain contenant un alcool. Cet alcool est un monoalcool ou un diol.
- Pour le monoalcool, ça peut être du méthanol, l'éthanol préférentiellement ou tout autre alcool linéaire ou ramifié avec une chaine hydrocarbonnée.
- Pour le diol, ça peut être de l'éthylène glycol, tetraéthylène glycol...

On additionne ensuite à ce bain une base et le tout est mis en agitation.

Avantageusement, la base utilisée peut être du KOH ou du NaOH. Cette base peut être additionnée sous forme de granulés ou sous forme d'une solution aqueuse (50 % disponible commercialement). Le NaOH commercialement vendu sous forme de granulés déboucheur donne également d'excellents résultats.

Au bout de quelques minutes, les morceaux de PET commencent à s'opacifier et à se tordre.

Quand la réaction est finie, un solide en suspension est obtenu.

Ce dernier est filtré. Le filtrat comporte l'alcool utilisé et l'éthylène glycol EG obtenu.

Le gâteau filtré contient l'acide téréphtalique sous sa forme estérifiée d'alcoolate DMT ou sa forme ionisée de téréphtalate de sodium ou de potassium ainsi que le matériau non réagi. L'alcool en excès et l'éthylène glycol obtenu peuvent être récupérés par les moyens connus par l'homme du métier à savoir, la distillation, centrifugation...

Dans le cas où l'acide téréphtalique est désiré, l'ajout de l'eau au gâteau engendre la dissolution et l'hydrolyse de l'ester de téréphtalate.

Une solution claire est obtenue après dissolution dans l'eau. Dans le cas particulier du PET opaque une étape supplémentaire de centrifugation/filtration est requise puisque le pigment utilisé est insoluble dans l'eau. Selon que ce dernier soit de l'oxyde de titane ou du carbonate de calcium le traitement sera différent.

Les morceaux non réagis sont retenus dans le filtre. L'acide téréphtalique PTA est obtenu en solution par précipitation avec un acide concentré (sulfurique, chlorhydrique, acétique) et ensuite par filtration du PTA précipité.

Selon le besoin industriel, certaines technologies de fabrication de résine PET ont recours à l'utilisation de l'ester diméthanolique de l'acide téréphtalique (DMT). D'une manière avantageuse, l'utilisation d'une base [wu1]alkoxyde tels que le méthoxyde de sodium ou de potassium permet d'obtenir le DMT. Ce dernier peut être récupéré par lavage au méthanol et présente l'avantage d'éviter le recours à l'utilisation de l'eau. En utilisant les techniques connues par l'homme du métier, il est possible de purifier le DMT par recristallisation et distillation à partir du gâteau obtenu.

D'une manière inattendue, d'autres types de solvants habituellement utilisés dans des applications visant à séparer des types de matériaux thermoplastiques de natures différentes ont donné également de bons résultats.

Plus précisément, l'utilisation du Methyl Ethyl Ketone MEK, qui est réputé dissoudre le PVC (polychlorure de vinyle) sans pour autant dissoudre le PET permet de séparer ces deux derniers dans des matériaux composites.

Le traitement du PET par du MEK suivant le procédé cité plus haut a fourni des résultats similaires. En effet, des temps de contact plus long selon la nature du PET mis en jeu (entre 3h et 10h versus 3h pour DMAc) sont nécessaires pour donner des rendements et des temps de dépolymérisation équivalents.

### Exemples de mise en œuvre de l'invention

Exemple 1 : Une quantité (2 g) de morceaux de polyéthylènetéréphtalate PET provenant de bouteilles en plastiques, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 4 heures. Ensuite, Les morceaux de PET traités sont égouttés, optionnellement lavés avec un alcool et séchés avant d'être transférés dans un réacteur en verre de 25 mL de volume. 20 mL de méthanol sont ajoutés aux morceaux prétraités suivis de 1,5 g de KOH en pastilles. Au fur et à mesure de la dissolution de la base, les morceaux de PET subissent une transformation physique et s'opacifient. Le milieu commence à chauffer légèrement sous l'effet combiné de la dissolution de la base dans le milieu et du début de la réaction. Au bout de 2h la totalité des morceaux de PET ont disparu laissant place à un solide blanc en solution. Le brut réactionnel est filtré sur papier filtre ou Buchner, le liquide récupéré contient le méthanol résiduel et l'éthylène glycol EG produit de la réaction de dépolymérisation. Le solide blanc est récupéré et est dissous par ajout d'un volume d'eau (30 mL). Une solution claire est obtenue. Le matériau non réagi demeure retenu dans le filtre. A la solution obtenue est ajouté de l'acide sulfurique concentré (97 %) jusqu'à un pH de 1,5 environ. L'acide téréphtalique précipite sous forme d'un solide blanc et est filtré puis séché pour donner lieu à 1,45 g de produit (99 % de rendement).

Exemple 2 Une quantité (2 g) de morceaux de polyéthylènetéréphtalate PET provenant de bouteilles en plastiques, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 18 heures. Ensuite, Les morceaux de PET traités sont égouttés, optionnellement lavés avec un alcool et séchés avant d'être transférés dans un réacteur en verre de 25 mL de volume. 20 mL de méthanol sont ajoutés aux morceaux prétraités suivis de 1,5 g de KOH en pastilles. Au fur et à mesure de la dissolution de la base, les morceaux de PET subissent une transformation physique et s'opacifient. Le milieu commence à chauffer légèrement sous l'effet combiné de la dissolution de la base dans le milieu et du début de la réaction. Au bout de 30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc est récupéré et est dissous par ajout d'un volume d'eau (30 mL). Une solution claire est obtenue. Le matériau non réagi demeure retenu dans le filtre. A la solution obtenue est ajouté de l'acide sulfurique concentré (97 %) jusqu'à un pH de 1,5 environ. L'acide téréphtalique précipite sous forme d'un solide blanc qui est filtré puis séché pour donner lieu à 1,45 g de produit (99 % de rendement).

Exemple 3 : Une quantité (1 g) de morceaux de polyéthylènetéréphtalate PET provenant de bouteilles en plastiques, après avoir été lavée à l'eau, est placée dans un récipient contenant du Methyl Ethyl Ketone MEK (10 mL) de telle manière à ce que tous les morceaux de plastiques soient immergés. Ces derniers sont mis en agitation pendant 18 heures. Ensuite, Les morceaux de PET traités sont égouttés, optionnellement lavés avec un alcool et séchés avant d'être transférés dans un réacteur en verre de 25 mL de volume. 20 mL de méthanol sont ajoutés aux morceaux prétraités suivis de 1,5 g de KOH en pastilles. Au fur et à mesure de la dissolution de la base, les morceaux de PET subissent une transformation physique et s'opacifient. Le milieu commence à chauffer légèrement sous l'effet combiné de la dissolution de la base dans le milieu et du début de la réaction. Au bout de 5 heures la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc est récupéré et est dissous par ajout d'un volume d'eau (30 mL). Une solution claire est obtenue. Le matériau non réagi demeure retenu dans le filtre. A la solution obtenue est ajouté de l'acide sulfurique concentré (97 %) jusqu'à un pH de 1,5 environ. L'acide téréphtalique précipite sous forme d'un solide blanc qui est filtré puis séché pour donner lieu à 1,44 g de produit (99 % de rendement).

Exemple 4 : Une quantité (2 g) de morceaux de polyéthylènetéréphtalate PET provenant de barquettes alimentaires, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 1h30. Ensuite, Les morceaux de PET traités sont égouttés, optionnellement lavés avec un alcool et séchés avant d'être transférés dans un réacteur en verre de 25 mL de volume. 15 mL de méthanol sont ajoutés aux morceaux prétraités suivis de 2,05 g de KOH en pastilles. Au bout de 30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc est récupéré et est dissous par ajout d'un volume d'eau (30 mL). Une solution claire est obtenue. Le matériau non réagi demeure retenu dans le filtre. A la solution obtenue est ajouté de l'acide sulfurique concentré (97 %) jusqu'à un pH de 1,5 environ. L'acide téréphtalique précipite sous forme d'un solide blanc qui est filtré puis séché pour donner lieu à 1,40 g de solide (97 % de rendement).

Exemple 5 : Une quantité (1 g) de morceaux de polyéthylènetéréphtalate PET opaque provenant de flacons à détergent, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 18h. Ensuite, Les morceaux de PET traités sont égouttés, optionnellement lavés avec un alcool et séchés avant d'être transférés dans un réacteur en verre de 25 mL de volume. 12 mL de méthanol sont ajoutés aux morceaux prétraités suivis de 1,5 g de NaOH en pastilles préalablement dissous dans 2 mL d'eau distillée. Au bout de 30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc est additionné dans une solution d'eau (30 mL). Une solution trouble est obtenue. Le pigment blanc est séparé par une centrifugation et le surnageant est récupéré. A la solution du surnageant obtenue est ajouté de l'acide sulfurique concentré (97 %) jusqu'à un pH de 1,5 environ. L'acide téréphtalique précipite sous forme d'un solide blanc qui est filtré puis séché pour donner lieu à 0,62 g.

Exemple 6 : Une quantité (2,65 g) de polyéthylènetéréphtalate PET transparent sous forme de pelures non broyées provenant de bouteilles d'eau, après avoir été lavée à l'eau, est placée dans un récipient contenant du Diméthylacétamide DMAc (15 mL) de telle manière à ce que tous les morceaux de plastiques soient immergés. Ces derniers sont mis en agitation pendant 18h. Ensuite, Les morceaux de PET traités sont égouttés, optionnellement lavés avec un alcool et séchés avant d'être transférés dans un réacteur en verre de 50 mL de volume. 15 mL de méthanol et 5 mL d'eau distillée sont ajoutés aux plastiques prétraités suivis de 2,65 g de KOH en pastilles dissous dans 5 mL d'eau. Au bout de 1 heure la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc est additionné dans une solution d'eau (30 mL). Une solution trouble est obtenue. Le pigment blanc est séparé par une centrifugation et le surnageant est récupéré. A la solution du surnageant obtenue est ajouté de l'acide sulfurique concentré (97 %) jusqu'à un pH de 1,5 environ. L'acide téréphtalique précipite sous forme d'un solide blanc qui est filtré puis séché pour donner lieu à 2 g (99 % de rendement).

Exemple 7 : Une quantité (2 g) de morceaux de polyéthylènetéréphtalate PET provenant de barquettes alimentaires, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 1h30. Ensuite, Les morceaux de PET traités sont égouttés, optionnellement lavés avec un alcool et séchés avant d'être transférés dans un réacteur en verre de 25 mL de volume. 15 mL de méthanol sec sont ajoutés aux morceaux prétraités suivis de 500 mg de KOH en pastilles. Au bout de 1h30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc qui est récupéré et lavé par du méthanol est l'ester de téréphtalate diméthanolique (DMT).

Exemple 8 : Une quantité (2 g) de morceaux de polyéthylènetéréphtalate PET provenant de barquettes alimentaires, après avoir été lavée à l'eau, est placée dans un récipient contenant du Diméthylacétamide DMAc (10 mL) de telle manière à ce que tous les morceaux de plastiques soient immergés. Ces derniers sont mis en agitation pendant 1h30. Ensuite, Les morceaux de PET traités sont égouttés, optionnellement lavés avec un alcool et séchés avant d'être transférés dans un réacteur en verre de 25 mL de volume. 15 mL de méthanol sec sont ajoutés aux morceaux prétraités suivis de 560 mg de méthoxyde de sodium en poudre. Au bout de 1h30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc qui est récupéré et lavé par du méthanol est l'ester de téréphtalate diméthanolique (DMT).

Exemple 9 : Une quantité (5 g) de morceaux de polyéthylènetéréphtalate PET provenant de barquettes alimentaires, après avoir été lavée à l'eau, est placée dans un récipient contenant du MEK (15 mL) de telle manière à ce que tous les morceaux de plastiques soient immergés. Ces derniers sont mis en agitation pendant 2h30. Ensuite, Les morceaux de PET traités sont égouttés, optionnellement lavés avec un alcool et séchés avant d'être transférés dans un réacteur en verre de 25 mL de volume. 30 mL de méthanol sec sont ajoutés aux morceaux prétraités suivis de 1,5 g de méthoxyde de sodium en poudre. Au bout de 30 minutes la totalité des morceaux de PET ont disparu laissant place à un solide blanc en solution. Le brut réactionnel est filtré sur papier filtre ou Buchner, le liquide récupéré contient le méthanol résiduel et l'éthylène glycol produit de la réaction de dépolymérisation. Le solide blanc qui est récupéré et lavé par du méthanol est l'ester de téréphtalate diméthanolique (DMT).

## Revendications

1. - Procédé de recyclage de déchets de plastiques PET comportant une étape de broyage des déchets pour produire des fragments parcellaires et une étape de traitement de dépolymérisation desdits fragments parcellaires pour la récupération des monomères de départ vierges qui sont l'acide téréphtalique (PTA) ou son ester dimethanolique (DMT) et l'éthylène glycol (EG) **caractérisé en ce qu'**il comporte :
- une étape de prétraitement par trempage sans dissolution dans un récipient assurant une agitation continue, desdits fragments parcellaires dans une solution comprenant au moins un mélange de solvants comprenant au moins un réactif choisi parmi les composants comprenant le DMAc (diméthyl acétamide), le DMF (diméthyl formamide), le MEK (Methyl Ethyl Ketone), des esters phénoliques ou des biphényl éthers à une température inférieure à 50° et pendant une durée inférieure à 18 heures,
- suivie par une étape de décantation
- suivie par une étape de traitement des fragments de PET prétraités dans un récipient contenant un monoalcool ou un diol et une base à une température inférieure à 50°
- suivie par une opération de récupération du solide en suspension et de filtrage.

2. - Procédé de recyclage de déchets de plastiques PET selon la revendication précédente **caractérisé en ce que** ledit réactif de l'étape de prétraitement est constituée par le DMAc ou le DMF, l'étape de décantation étant suivie par une étape de lavage des fragments prétraités avec un alcool avant l'ajout de la base.

3. - Procédé de recyclage de déchets de plastiques PET selon la revendication précédente **caractérisé en ce que** ladite étape de décantation comporte un traitement de récupération des réactifs pour la réutilisation pour un prétraitement ultérieur de nouveaux déchets de plastique PET.

4. - Procédé de recyclage de déchets de plastiques PET selon la revendication précédente **caractérisé en ce que** le dit solide récupéré est un monoester ou un diester méthylique de l'acide térephtalique.

5. - Procédé de recyclage de déchets de plastiques PET selon la revendication 3 **caractérisé en ce que** ledit solide récupéré est lavé ou soumis à une distillation pour purifier le dit ester de téréphtalate diméthanolique (DMT).

6. - Procédé de recyclage de déchets de plastiques PET selon la revendication 3 **caractérisé en ce que** ledit solide récupéré est dissous dans une solution aqueuse pour donner lieu à la forme basique de l'acide téréphtalique soluble dans l'eau.

7. - Procédé de recyclage de déchets de plastiques PET selon la revendication 3 **caractérisé en ce que** la solution obtenue est soumise à l'ajout d'un acide minéral ou organique pour l'obtention de l'acide téréphtalique par précipitation.

## Patentansprüche

1. Verfahren zum Recyceln von PET-Kunststoffabfällen, das einen Schritt eines Mahlens der Abfälle zum Erzeugen von parzellären Fragmenten und einen Schritt einer Depolymerisationsverarbeitung der parzellären Fragmente zum Gewinnen von unberührten Ausgangsmonomeren aufweist, die Terephthalsäure (PTA) oder ihr Dimethanolsäureester (DMT) und Ethylenglycol (EG) sind,
**dadurch gekennzeichnet, dass** es aufweist:
- einen Schritt eines Vorbehandelns durch Einweichen ohne Auflösung in einem Behälter, der ein kontinuierliches Rühren gewährleistet, der parzellären Fragmente in einer Lösung, umfassend mindestens eine Mischung von Lösungsmitteln, umfassend mindestens ein Reagens, das aus den Komponenten ausgewählt ist, umfassend DMAc (Dimethylacetamid), DMF (Dimethylformamid), MEK (Methylethylketon), Phenolestern oder Biphenylethern bei einer Temperatur unter 50° und für eine Dauer von weniger als 18 Stunden,
- gefolgt von einem Dekantierschritt
- gefolgt von einem Schritt eines Behandelns der vorbehandelten PET-Fragmente in einem Behälter, der einen Monoalkohol oder ein Diol und eine Base enthält, bei einer Temperatur unter 50°
- gefolgt von einem Vorgang des Gewinnens des suspendierten Feststoffes und eines Filterns.

2. Verfahren zum Recyceln von PET-Kunststoffabfällen nach dem vorstehenden Anspruch, **dadurch gekennzeichnet, dass** das Reagens des Vorbehandlungsschritts aus DMAc oder DMF besteht, wobei auf den Dekantierschritt ein Schritt eines Waschens der vorbehandelten Fragmente mit einem Alkohol vor dem Zugeben der Base folgt.

3. Verfahren zum Recyceln von PET-Kunststoffabfällen nach dem vorstehenden Anspruch, **dadurch gekennzeichnet, dass** der Dekantierschritt eine Reagensrückgewinnungsbehandlung für die Wiederverwendung für eine spätere Vorbehandlung von neuen PET-Kunststoffabfällen aufweist.

4. Verfahren zum Recyceln von PET-Kunststoffabfällen nach dem vorstehenden Anspruch, **dadurch gekennzeichnet, dass** der gewonnene Feststoff ein Methylmonoester oder -diester von Terephthalsäure ist.

5. Verfahren zum Recyceln von PET-Kunststoffabfällen nach Anspruch 3,
**dadurch gekennzeichnet, dass** der gewonnene Feststoff zum Reinigen des Dimethanolterephthalatesters (DMT) gewaschen oder einer Destillation unterzogen wird.

6. Verfahren zum Recyceln von PET-Kunststoffabfällen nach Anspruch 3,
**dadurch gekennzeichnet, dass** der gewonnene Feststoff zum Ergeben der basischen Form der wasserlöslichen Terephthalsäure in einer wässrigen Lösung aufgelöst wird.

7. Verfahren zum Recyceln von PET-Kunststoffabfällen nach Anspruch 3,
**dadurch gekennzeichnet, dass** die erhaltene Lösung dem Zugeben einer mineralischen oder organischen Säure zum Erhalten der Terephthalsäure durch Fällung unterzogen wird.

## Claims

1. Method for recycling PET plastic waste comprising a step of grinding the waste to produce fragmentary pieces and a step of depolymerization treatment of said fragmentary pieces to recover virgin starting monomers which are terephthalic acid (TPA) or its dimethanol ester (DMT) and ethylene glycol (EG),
**characterized in that** it comprises:
- a step of pre-treating by soaking, without dissolving, in a container ensuring continuous stirring, said fragmentary pieces in a solution comprising at least one mixture of solvents comprising at least one reagent selected from components comprising DMAc (dimethylacetamide), DMF (dimethylformamide), MEK (Methyl Ethyl Ketone), phenolic esters or biphenyl ethers at a temperature less than 50° and for a period of less than 18 hours,
- followed by a step of decanting
- followed by a step of treating the pretreated PET fragments in a container containing a monoalcohol or a diol and a base at a temperature less than 50°
- followed by an operation for recovering the solid in suspension and filtering.

2. Method for recycling PET plastic waste according to the preceding claim,
**characterized in that** the reagent of the pretreatment step consists of DMAc or DMF, the decanting step being followed by a step of washing the pretreated fragments with an alcohol before adding the base.

3. Method for recycling PET plastic waste according to the preceding claim,
**characterized in that** said decanting step comprises a treatment for recovering reagents for reuse in a subsequent pretreatment of new PET plastic waste.

4. Method for recycling PET plastic waste according to the preceding claim,
**characterized in that** said recovered solid is a monoester or a methyl diester of terephthalic acid.

5. Method for recycling PET plastic waste according to claim 3,
**characterized in that** said recovered solid is washed or subjected to distillation to purify said dimethanol terephthalate ester (DMT).

6. Method for recycling PET plastic waste according to claim 3,
**characterized in that** said recovered solid is dissolved in an aqueous solution to produce the basic form of water-soluble terephthalic acid.

7. Method for recycling PET plastic waste according to claim 3,
**characterized in that** the solution obtained is subjected to the addition of a mineral or organic acid to obtain terephthalic acid by precipitation.
